(19) Europäisches Patentamt / European Patent Office / Office européen des brevets

(11) **EP 4 267 847 B1**

(12) **EUROPEAN PATENT SPECIFICATION**

(45) Date of publication and mention
of the grant of the patent:
**25.06.2025 Bulletin 2025/26**

(21) Application number: **21911638.1**

(22) Date of filing: **11.11.2021**

(51) International Patent Classification (IPC):
*F03D 1/06* *(2006.01)*    *F03D 7/02* *(2006.01)*
*F03D 9/25* *(2016.01)*    *F03D 15/00* *(2016.01)*

(52) Cooperative Patent Classification (CPC):
**F03D 9/25; F03D 1/0658; F03D 7/0232;
F03D 15/207;** F03D 13/25; F05B 2240/2213;
F05B 2240/40

(86) International application number:
**PCT/NO2021/050234**

(87) International publication number:
**WO 2022/139585 (30.06.2022 Gazette 2022/26)**

(54) **SYSTEM FOR OFFSHORE POWER GENERATION**

SYSTEM ZUR OFFSHORE-STROMERZEUGUNG

SYSTÈME DE PRODUCTION D'ÉNERGIE EN MER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2020 NO 20201422**

(43) Date of publication of application:
**01.11.2023 Bulletin 2023/44**

(73) Proprietor: **Ramde, Roar**
**3179 Åsgårdstrand (NO)**

(72) Inventor: **Ramde, Roar**
**3179 Åsgårdstrand (NO)**

(74) Representative: **Acapo AS**
**Edvard Griegs vei 1**
**5059 Bergen (NO)**

(56) References cited:
EP-A1- 3 020 959    EP-A2- 2 233 735
EP-B1- 0 761 964    DE-A1- 19 652 673
ES-A2- 2 140 301    US-A1- 2005 280 264
US-A1- 2010 026 010    US-A1- 2012 269 632
US-A1- 2015 226 186    US-A1- 2020 025 175

## Description

### Field of the invention

The present invention relates to a turbine system for offshore power generating utilizing wind to generate power. The system comprises a wind turbine assembled on a mast installed on a floating buoyancy body.

The offshore power generating system comprises a T-shaped hub connected to propeller blades and a plurality of generators on a common shaft in a generator housing.

### Background of the invention

Wind turbines for electrical power generation is generally known from the past and have undergone a development in recent years. From being solely fixed on land, the development has also made it possible to install on the seabed and on floating bodies anchored on the seabed.

The dimensions, weight and construction costs of the wind turbines increases when output power increases, and this relationship is today one of several limiting factors for the construction and building of larger turbines with associated larger propeller diameter and with a hub in a higher position above the water surface.

While the swept area of the propeller, which traps the wind and is the basis for energy production, increases with scaling with the scale in the power of two will the volume of the structure elements, and thereby the weight, increase with the scale in a power close to 3.

The increased weight generally causes greater loads on the structure, especially due to the weight of the generator and the propeller on top of the mast.

The larger propeller diameter will increase the deflection of the propeller blades located in a greater distance from the mast which in turn increases the weight. A large propeller diameter will also meet great variations of the velocity of the inflowing air from the lower position until the blade reaches its top-position, for example the tip of the propeller in the lower position 50 m above sea level and with the tip of the propeller in the upper position 450 m above the sea level may experience an increase in wind velocity of 25 %, while a today more common propeller diameter in upper position 230 m above sea level will experience an increase of 16%, which is found using the term:

$$V\ top = V\ bottom * (Z\ top\ /\ Z\ bottom)^{0,1},$$

where V expresses velocity and Z height above sea level.

In order to compensate for the difference in lift of the propeller blade, and contribution to the torque of the generators, through a half turn of the propeller, with a duration of about 4-5 seconds, the propeller blades in the current embodiment are made rotatable about their longitudinal axis and thereby regulate the angle in relation to inflowing air with corresponding change in lift. As the diameter increases the weight of the blade and corresponding mass inertia will become too big to allow such rapid rotations. Large diameter propellers must therefore be made fixedly connected to the hub and changes in the angle of rotation along the blades longitudinal direction must be created by use of a plurality of flaps which at any time, by means of actuators, can be set separately and quickly to optimal angle.

Imbalance in the propeller blade due to the varying wind conditions could cause oscillations and vibrations in the structure which, together with increased loads, makes greater demands to the construction of and foundation of the unit, overall the construction costs will be significantly increased.

A desired increase in production will therefore today primarily take place by increasing the plurality of standardized units in a pattern known from land and shallow coastal waters here the production occupies large areas.

Such arrangements often have major environmental consequences and will, for example, be a threat to bird populations, interference on the seabed by embedded anchoring systems, power and signal cables that will have an impact on the marine life and thus also the fishing industry. The area required will also be an obstacle for fishing and shipping.

There is therefore a need for a system to increase the capacity of the power generating unit without large increases in dimensions and weight, so that the number of units is reduced and thereby the impact on the nature is reduced.

The output of the turbine is determined by the efficiency of the propeller and the generator. It is therefore desirable to improve the propeller's ability to deliver as much lift, and thus torque, under all the varying wind conditions and combine this with adjusting the load on the generators so that the turbine's total output is optimized. The process of controlling the optimal setting of the variable surfaces of the propeller and the plurality of generators in operation at all time is controlled by a central unit receiving data from sensors in propeller blades, generators and from the outside of the wind turbine.

### Disclosure of the state of art

Teco-Westinghouse Motor Company ( www.tecowestinghouse.com) manufactures direct current, DC, motors consisting a common shaft with two electric rotors in a row assembled on the shaft, with associated separate stators assembled on the inside of a common enclosing housing. The motor is not designed to regulate the performance by disengaging the rotor/stator units. The motors are often used where the space conditions make it desirable with a small construction height, such as in submarines.

US 8084909B2 describes a motor/generator which is extended in the longitudinal direction about its axis of rotation and which thereby emits increased effect at the same diameter. The generator is not divided into sections and the load on the generator can therefore not be regulated by engaging/disengaging sections. The embodiment is offered i.a. for use in wind turbines where the diameter is important.

EP1442216B2 describes a propeller where the aerodynamic properties can be regulated by changing the blade area, angle of rotation and the effective area's distance from the hub. One embodiment shows the propeller blade divided into two sections, of which the outer section in retracted position is hidden in the inner section and which by means of telescopic arms can be pushed out and thus increase the wing area. Another embodiment consists in that the entire propeller blade assumes different positions from the hub by means of telescopic devices. The embodiments shall be able to better utilize the energy in the varying wind conditions by at any time adapting the area of the propeller blade, angle of rotation and position as best as possible in the currently available wind current.

EP2087205B1 describes a turbine blade divided into 2 sections in the longitudinal direction where the outer section has an adjustable angle of rotation controlled by an actuator, the inner section, which is reinforced with wire rods, can also be rotated to either a working position or to a parked position. The embodiment shall have higher efficiency by continuously regulating the angle of rotation of the outer section optimally in relation to the incoming wind current.

JP2001132615A and DE102004022730A1 are both examples of solutions where increased propeller efficiency are sought to be achieved by using variable propeller blade length and where the outer section, in addition to being rotatable, is rotatable and provided with flaps to regulate the lift.

US9500179B2 describes a propeller blade built in 3 sections and where the fixed connection between the sections consists of a construction of pipes and angles that should best be able to absorb bending moments and shear forces.

Further prior art documents considered during the patent prosecution process are i.a.: EP0761964B1 and EP2233735A2.

### Summary of the invention

In the following throughout the specification, the following terms means:
The term "wind turbine" is used to describe a unit utilizing the kinetic energy to produce power. The wind turbine comprises at least one propeller blade, preferably two blades, rotatable arranged on a hub. The wind acts on the propeller blades and sets them in a rotating motion in a propeller plane perpendicular on a horizontal axis which again is connected to one or more generators producing electrical power. The wind turbine is arranged on top of a mast, a certain height above the water surface, with the propeller plane behind the generators, with respect to the wind direction.

The term "generator housing" is used to describe a cylindrical, or approximately cylindrical space for the generators which on a common shaft are supported in transverse bulkheads.

The term "swept-back" is used to describe the swept-back profile of the propeller blades in the propeller plane in relation to the direction of rotation.

The term "hub" is used to describe the T-shaped, central unit connecting the propeller blades to the generators and is having its centre where the generator axis crosses the propeller plane.

The term "coupling" is used to describe a firm or inn/out unit connecting two, about the same axis, rotating objects so that the coupling forms an integral part of a common rotational axis and where the coupling is built in two parts, on half at each end of the interconnected rotational axis and where the in/out unit has a common device for joining/separating the two halves.

The term "rotation" is used to describe the effective angle of the propeller blade plane with respect to the inflowing wind at any position along the blade and where this is regulated by use of flaps.

The term "flaps" is used to describe a plurality of separately, hinged sections at the trailing edge of the propeller blade which by means of the actuators can be brought to an angle relative to the propeller blade and thereby increase the lift of the propeller blade or reduce it by interfering with the flow of the streamlines over the top of the profile.

The term "actuator" is used to describe an electrical or hydraulic unit which by an impulse from a central control unit regulates the rotation of flaps and in/out couplings.

The term "capsule" is used to describe a streamlined construction for the protection of generator housing, cooling system and control equipment.

It is an object of the present invention to provide a system where the turbine's propeller and generators continuously transform the wind energy available at any time into electrical energy in the most efficient manner and so that the variations in loads in propeller blades, generators and loadbearing constructions during the rotation, thus are reduced.

Another object of the present invention is to provide a system where the turbine's propeller and generators, separately or jointly, are adjusted to the at any time surrounding prevailing wind conditions by selecting the angle of rotation of the flaps on the individual section of the propeller blade and by in/out coupling of generator units.

Further, it is an object to provide a system where each of the sectioned propeller blade of the turbine, individually for each section, at any time regulates the rotation according to the position of the section in the propeller plane by means of flaps.

Another object is to provide a system where the rotation of the propel sections is adjusted in relation to the relative movements of the propeller blades in the air flow when turbine and mast are assembled on a vessel moving in the sea, especially during angular movements in the longitudinal, vertical plane of the vessel.

Another object with the invention is to provide a system in which the hub of the two propeller blades is formed T-shaped with a symmetrical, radial, fixed and continuous projecting connection of suitable length, where the end points are provided with a device for connecting with the respective propeller blades.

A further object of the invention is to provide a system for assembly of propeller, hub and generators in an approximately cylindrical foundation that is being integrated with the mast.

The objects are achieved according to the invention by a system for offshore power generation as described in the independent claims, where embodiments, variants or alternatives can partly or further be achieved by the dependent claims.

In a first aspect, the present invention relates to a power generating system comprising a T-shaped hub comprising a rotating shaft, and radial out from the rotating shaft two arms for connecting to propeller blades and at least two generators arranged on a common shaft in a generator housing. Wherein the common shaft is connected to the rotating shaft of the hub by means of a coupling. The system is characterized in that the hub transfers the variable torque from each propeller blade, with a plurality of flaps wherein each generator is connected to the common shaft by means of the couplings.

Optionally the common shaft is fixed or releasably connected to the rotating shaft of the hub and the generators is fixed or releasably connected to the common shaft.

The T-shaped hub comprises two arms, wherein each arm is connected to one propeller blade.

The generator housing comprises transverse bulkheads for support of the rotating shaft and common shaft and for dividing the generator housing into separate compartments.

The rotating shaft is supported in the transverse bulkheads by means of bearings and the common shaft is supported in the transverse bulkheads by means of bearings.

Each propeller blade in the propeller plane has a swept-back leading edge with a radius corresponding to approximately the diameter of the propeller. The distance between the respective fastening points for the propeller blades in the T-shaped hub is approximately 10% of the propeller diameter of the system. A plurality of separate flaps is arranged at the trailing edge of each propeller blade. Each flap is rotatable about 45 degrees to both sides from its normal position about its respective axis of rotation. The length of the flaps is 1/3 - 1/4 of the total length L of the blade profile.

Each flap is regulated by means of an actuator and the actuator is controlled by a central unit receiving data from groups of sensors installed on propeller blades, flaps, generators, coupling etc. for monitoring the load and output of the system.

The generator housing is cylindrical or approximately cylindrical.

A streamlined capsule encloses the generator housing.

The generator housing is connected to a streamlined mast supporting the power generating system.

In a calm wind condition, one generator only may be engaged thereby reducing the start-up friction and moment of inertia and allow the turbine to take up production at an earlier time, or if the available wind energy may be absorbed by a lesser number of generator one or more generator may be disengaged, thereby reducing wear and tear and allow for maintenance and repairs while still in production.

Thus, in one embodiment, the present invention relates to an offshore power generating system comprising;

> a propeller with two propeller blades, extending from a hub forming one end point of the horizontal oriented axis of rotation of the propeller perpendicular to the propeller plane and where the hub with propeller is positioned behind the generators relative to the wind direction;
> a T-shaped hub comprising one or more fixedly connected and integrated radial projecting arms in the propeller plane which in a suitable distance from the hub terminates with a device for joining with the respective propeller blades and in the axial direction a fixed and projecting arm for connecting with the axis of rotation of the propeller;
> a rotational shaft for the propeller arranged for connection with two or more generators to the same rotational shaft and where fixed or engaging/disengaging couplings are installed between some or all generators, which by engaging/-disengaging, can regulate the desired variable torque of the plurality of generators connected to the propeller shaft with a corresponding fixed connection or connection that can be engaged/disengaged between the axis of the propeller and the generator shaft;

a cylindrical shaped or approximately cylindrical shaped space enclosing the generator and the rotational shaft of the propeller, located in the axis of the cylindrical shape and supported in a plurality of planes perpendicular to the axis of the cylinder, and where the stator elements of the generators can be allowed to be installed on the inside of the cylinder shell;

a cylindrically formed space or approximately cylindrically formed enclosing the generators and the rotational shaft of the propeller and which is fixedly connected and integrated with the mast;

a central unit receiving data from sensors monitoring the load and output of the unit and controls the actuators of the system at any time.

Thus, in another embodiment, the present invention relates to an offshore power generating system comprising

a propeller comprising two swept-back blades

a T-shaped hub with two protruding arms for joining with propeller blades and arm for connecting to the generator shaft;

a common generator shaft with one or more generators in a row with intermediate couplings and coupling to the propeller;

a cylindrical space for installation of generators and integrated with foundation for T-shaped hub with propeller and supporting mast

a control unit receiving signals form several groups of sensors which at any time reports data of importance for the proper regulation of all moving parts and couplings.

The system is characterised in that the propeller blades, by means of a number of flaps along the trailing edge of the propeller blade, are adjusted individually and optimal in relation to the strength of the wind and thus contribute to a better utilization of the wind energy and to the distribution of the propellers total load so that the loads, oscillations and vibrations are reduced.

The propeller blades are fixedly connected to the fixed arms projecting from the hub, substantially in a tubular design, as a replacement for a natural extension of the blade profile towards the hub.

The propeller blades in the propeller plane are given a curved shape tangential from the projecting arm, in a deflecting curve in the direction of rotation, whereby the leading edge of each propeller blade, during rotation, not simultaneously but gradually enters into wind conditions with varying velocity and turbulence also behind the turbulent shadow of the mast, so that the resulting variation in the load on the blade and associated oscillations are reduced.

The surrounding wind that flows into the propeller plane appears with increasing velocity and with less turbulence with increasing height over the water surface. Furthermore, the water content in air will usually decrease with increasing height, with a corresponding increase in the density of the drier air and which directly increase the power production in proportion to the density.

When choosing a larger propeller diameter with associated greater height above the water surface, the propeller blade in the top position will operate in an air flow with a greater velocity and density than the propeller blade working in a bottom position closest to the water surface. Without correction of these, at each revolution varying forces, there could be an unbalance in the rotating system with generation of tension and oscillations in the structural elements. Propeller blades with a smaller diameter are usually not exposed to such large varying forces and such propeller blades are therefore constructed with a fixed, calculated optimal rotation of the blade applicable to one wind condition, such propellers often have propeller blades that are rotatable about the longitudinal direction.

When the diameter is further increased, the weight of the propeller blade and the inertia against rotation the weight constitute, makes it difficult to carry out rapid corrections required to utilize the varying wind velocities.

For a large diameter propeller, a correction of the rotation by using flaps, as set forth in the present invention, will remedy the situation.

The propeller is dimensioned for a permissible deflection out of the propeller plane due to the influence of the wind current and within the yield strength of the material, and tangential to the T-shaped hub.

The hub carries the propeller in a bearing in the axis of rotation and is connected to the generator shaft with a coupling. The central part of the hub comprises a T-shaped cylindrical shape with two radial projecting arms, one for each propeller blade, which is dimensioned for the expected bending moments and shear forces the arm can be exposed to. The arms are made in an approximately tubular construction through the hub from the jointed unit of the one propeller blade to the next, in a length adapted to those working conditions the propeller is designed for. The arms are continuous into the hub and connected with the cylindrical, axial structural support of the hub directly connected with a coupling to the free end of the generator shaft. The generator shaft is supported by bearings mounted/assembled in transverse bulkheads in the cylindrical space enclosing the generators.

The generator shaft is divided into a plurality of sections, corresponding to the number of generators, where each generator with its associating rotor is provided with couplings. The sections are, in connection with the couplings, supported in transverse bulkheads in the cylindrical space for the generators.

The respective stators of the generators can be installed sectionally on the inside of the cylinder shell in the plane of the respective rotors. The cylinder shell is provided with cooling channels for water from the air to water cooling system. The cylindrical space for the generators with a load-bearing connection to the hub with propeller is integrated in a fixed connection to the supporting mast.

## Description of the figures

Preferred embodiments of the present invention will now be described in more detail, with reference to the following figures, wherein:

Figure 1 shows schematically and in perspective one possible embodiment of a system for optimal power generation where the system shows a T-shaped hub connected to a propeller blade with a generator unit comprising a number/plurality of generators.

Figure 2 shows schematically a cross-section through the propeller blade showing an embodiment of flaps where the respective flaps are individually rotatable about an axis parallel with the trailing edge of the propeller/blade.

Figure 3 shows schematically and in a vertical section through the generator units one possible embodiment showing the connection between the propeller blades and the generator units by a T-shaped hub and the generators interconnection on a common shaft.

## Description of embodiments of the invention

The following description of the exemplary embodiments refers to the accompanying drawings. The same reference number in the different drawings identify the same or similar elements. The following detailed description does not limit the invention or the scope of protection, the scope of protection being defined by the appended claims.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment.

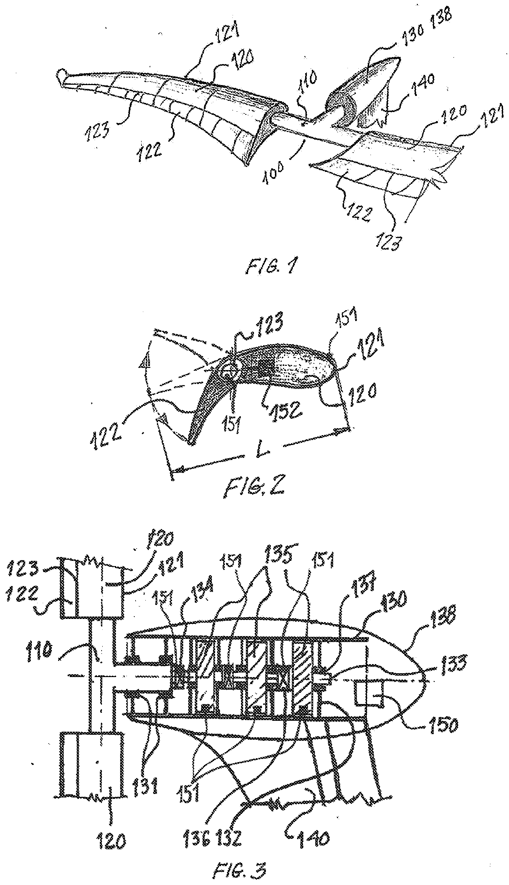

Figure 1 shows schematically and in perspective one possible embodiment of a system 100 for offshore power generation. The system 100 shows a T-shaped hub 110 fixedly connected to two propeller blades 120 and to the generators in a generator housing 130 which in turn is connected to a mast 140. The propeller blades 120 is fixedly connected to the hub 110 at a distance between the propeller blades constituting approximately10 % of the propeller diameter of the system and comprises of a plurality of sections, here showing 4 section, an where a number of flaps 122 are arranged at the trailing edge of each section, here are 3 flaps shown on each section. The leading edge 121 of the propeller blades 120 has a deflected shape in the propeller plane with a radius in meters corresponding approximately to the propeller diameter of the system (not shown).

Figure 2 shows schematically in a cross-section through one possible embodiment of the propeller blade 120 with flaps 122 where the distance from the trailing edge of the cross-section to the axis of rotation 123 of the flaps is about 1/4 to 1/3 of the total length L of the section and where the deflection of the flaps in both direction from normal position is about 45 degrees.

Figure 3 shows schematically in a vertical section through the generator housing 130 one possible embodiment showing the T-shaped hub 110 supported in the bearings 131 which in turn are fixed in the transverse bulkheads 132 in the generator housing 130 and connected with the generator shaft 133 with a coupling 134.

A plurality of generators 135, here is 3 generators shown, are installed in a common shaft 133 with couplings 136 between the units and where the generators' bearings 137 of are fixed in transverse bulkheads 132 in the generator housing 130.The generator housing 130 is in turn connected with a streamlined mast 140 which supports the power generating system.

A central control unit 150 is installed in the generator housing 130 with sensors 151 distributed in the wind turbine, (not shown) an actuator connected to flaps 122 and generators 135. A streamlined capsule 138 encloses the generator housing.

**Table 1**

| | |
|---|---|
| 100 | Offshore power generating system |
| 110 | T-shaped hub |
| 110a | Rotating shaft |
| 110b | Arm |
| 120 | Propeller blades |
| 121 | Leading edge of the propeller blade |
| 122 | Flaps |
| 123 | Axis of rotation of the flaps |
| 130 | Generator housing |
| 131 | Bearing |
| 132 | Transverse bulkhead |
| 133 | Generator shaft |
| 134 | Coupling between hub 110 and generator shaft 133 |
| 135 | Generators |
| 136 | Coupling between generators 135 |
| 137 | Bearing for generator |
| 138 | Streamlined capsule |
| 140 | Mast |
| 150 | Central control unit |
| 151 | Sensors |
| 152 | Actuators |

**Claims**

1. An offshore power generating system (100) comprising

   a T-shaped hub (110) comprising a rotating shaft (110a), and radial out from the rotating shaft (110a) two arms (110b) connected to propeller blades (120), and
   at least two generators (135) arranged on a common shaft (133) in a generator housing (130);
   wherein the common shaft (133) is connected to the rotating shaft (110a) of the hub (110) by means of a coupling (134); and
   wherein the hub (110) transfers variable torque from each propeller blade (120) to the common shaft (133), wherein each propeller blade (120) comprises a plurality of flaps (122), and wherein each generator (135) is connected to the common shaft (133) by means of couplings (136).

2. Offshore power generating system (100) according to claim 1, wherein the common shaft (133) is fixed or releasably connected to the rotating shaft (110a) of the T-shaped hub (110).

3. Offshore power generating system (100) according to any preceding claim, wherein the generators (135) are fixed or releasably connected to the common shaft (133).

4. Offshore power generating system (100) according any preceding claim, wherein the generator housing (130) comprises transverse bulkheads (132) for support of the rotating shaft (110a) and common shaft (133) and for dividing the generator housing (130) into separate compartments.

5. Offshore power generating system (100) according to claim 4, wherein the rotating shaft (110a) is supported in the transverse bulkheads (132) by means of bearings (131) and the common shaft (133) is supported in the transverse bulkheads (132) by means of bearings (137).

6. Offshore power generating system (100) according to any preceding claim, where each propeller blade (120) in the propeller plane has a swept-back leading edge (121 with a radius corresponding to approximately the diameter of the propeller.

7. Offshore power generating system (100) according to claim 6, wherein the distance between the respective fastening points for the propeller in the T-shaped hub are approximately 10% of the propeller diameter of the system.

8. Offshore power generating system (100) according to claim 7, wherein a plurality of separate flaps (122) are arranged at the trailing edge of each propeller blade (120).

9. Offshore power generating system (100) according to claim 8, wherein each flap (122) is rotatable about 45 degrees to both sides from its normal position about its respective axis of rotations (123).

10. Offshore power generating system (100) according to claim 9, wherein the length of the flaps (122) is 1/3 - 1/4 of the total length L of the blade profile.

11. Offshore power generating system (100) according to claim 10, wherein each flap (122) is regulated by means of an actuator.

12. Offshore power generating system (100) according to claim 11, wherein the actuator is controlled by a central unit receiving data from groups of sensors (151) installed on propeller blades (120), flaps (122), generators (135), couplings (134, 136) for monitoring the load and output of the system (100).

13. Offshore power generating system (100) according to any preceding claim, wherein the generator housing (130) is cylindrical or approximately cylindrical

14. Offshore power generating system (100) according to any preceding claim, wherein a streamlined capsule (138) encloses the generator housing (130).

15. Offshore power generating system (100) according to any preceding claim wherein the generator housing (130) is connected to a streamlined mast (140) supporting the power generating system (100).


**Patentansprüche**

1. Offshore-Stromerzeugungssystem (100), umfassend

   eine T-förmige Nabe (110), umfassend eine Rotationswelle (110a) und radial außerhalb der Rotationswelle (110a) zwei Arme (110b), die mit Propellerblättern (120) verbunden sind, und
   mindestens zwei Generatoren (135), die auf einer gemeinsamen Welle (133) in einem Generatorgehäuse (130) angeordnet sind; wobei die gemeinsame Welle (133) mit der Rotationswelle (110a) der Nabe (110) mittels einer Kupplung (134) verbunden ist; und
   wobei die Nabe (110) ein variables Drehmoment von jedem Propellerblatt (120) auf die gemeinsame Welle (133) überträgt,
   wobei jedes Propellerblatt (120) eine Vielzahl von Klappen (122) umfasst, und wobei jeder Generator (135) mit der gemeinsamen Welle (133) mittels Kupplungen (136) verbunden ist.

2. Offshore-Stromerzeugungssystem (100) nach Anspruch 1, wobei die gemeinsame Welle (133) fest oder lösbar mit der Rotationswelle (110a) der T-förmigen Nabe (110) verbunden ist.

3. Offshore-Stromerzeugungssystem (100) nach einem der vorstehenden Ansprüche, wobei die Generatoren (135) fest oder lösbar mit der gemeinsamen Welle (133) verbunden sind.

4. Offshore-Stromerzeugungssystem (100) nach einem der vorstehenden Ansprüche, wobei das Generatorgehäuse (130) Querschotten (132) zum Stützen der Rotationswelle (110a) und der gemeinsamen Welle (133) und zum Unterteilen des Generatorgehäuses (130) in separate Abteile umfasst.

5. Offshore-Stromerzeugungssystem (100) nach Anspruch 4, wobei die Rotationswelle (110a) in den Querschotten (132) mittels Lagern (131) gestützt ist und die gemeinsame Welle (133) in den Querschotten (132) mittels Lagern (137) gestützt ist.

6. Offshore-Stromerzeugungssystem (100) nach einem der vorstehenden Ansprüche, wobei jedes Propellerblatt (120) in der Propellerebene eine zurückgebogene Vorderkante (121) mit einem Radius aufweist, der ungefähr dem Durchmesser des Propellers entspricht.

7. Offshore-Stromerzeugungssystem (100) nach Anspruch 6, wobei der Abstand zwischen den jeweiligen Befestigungspunkten für den Propeller in der T-förmigen Nabe etwa 10% des Propellerdurchmessers des Systems beträgt.

8. Offshore-Stromerzeugungssystem (100) nach Anspruch 7, wobei eine Vielzahl von separaten Klappen (122) an der Hinterkante jedes Propellerblatts (120) angeordnet ist.

9. Offshore-Stromerzeugungssystem (100) nach Anspruch 8, wobei jede Klappe (122) um etwa 45 Grad zu beiden Seiten aus ihrer normalen Position um ihre jeweilige Rotationsachse (123) drehbar ist.

10. Offshore-Stromerzeugungssystem (100) nach Anspruch 9, wobei die Länge der Klappen (122) 1/3 - 1/4 der Gesamtlänge L des Blattprofils beträgt.

11. Offshore-Stromerzeugungssystem (100) nach Anspruch 10, wobei jede Klappe (122) mittels eines Aktuators reguliert wird.

12. Offshore-Stromerzeugungssystem (100) nach Anspruch 11, wobei der Aktuator von einer Zentraleinheit gesteuert wird, die Daten von Gruppen von Sensoren (151) empfängt, die an Propellerblättern (120), Klappen (122), Generatoren (135) und Kupplungen (134, 136) zum Überwachen der Last und Leistung des Systems (100) installiert sind.

13. Offshore-Stromerzeugungssystem (100) nach einem der vorstehenden Ansprüche, wobei das Generatorgehäuse (130) zylindrisch oder annähernd zylindrisch ist

14. Offshore-Stromerzeugungssystem (100) nach einem der vorstehenden Ansprüche, wobei eine stromlinienförmige Kapsel (138) das Generatorgehäuse (130) umschließt.

15. Offshore-Stromerzeugungssystem (100) nach einem der vorstehenden Ansprüche, wobei das Generatorgehäuse (130) mit einem stromlinienförmigen Mast (140) verbunden ist, der das Stromerzeugungssystem (100) stützt.

## Revendications

1. Système de production d'énergie en mer (100) comprenant

   un moyeu en forme de T (110) comprenant un arbre rotatif (110a), et radialement à partir de l'arbre rotatif (110a) deux bras (110b) reliés à des pales d'hélice (120), et
   au moins deux générateurs (135) disposés sur un arbre commun (133) dans un boîtier de générateur (130) ;
   dans lequel l'arbre commun (133) est relié à l'arbre rotatif (110a) du moyeu (110) au moyen d'un accouplement (134) ; et
   dans lequel le moyeu (110) transfère un couple variable de chaque pale d'hélice (120) à l'arbre commun (133), dans lequel chaque pale d'hélice (120) comprend une pluralité de volets (122), et dans lequel chaque générateur (135) est relié à l'arbre commun (133) au moyen d'accouplements (136).

2. Système de production d'énergie en mer (100) selon la revendication 1, dans lequel l'arbre commun (133) est fixé ou relié de manière amovible à l'arbre rotatif (110a) du moyeu en forme de T (110).

3. Système de production d'énergie en mer (100) selon l'une quelconque des revendications précédentes, dans lequel les générateurs (135) sont fixés ou reliés de manière amovible à l'arbre commun (133).

4. Système de production d'énergie en mer (100) selon l'une quelconque des revendications précédentes, dans lequel le boîtier de générateur (130) comprend des cloisons transversales (132) pour supporter l'arbre rotatif (110a) et l'arbre commun (133) et pour diviser le boîtier de générateur (130) en compartiments séparés.

5. Système de production d'énergie en mer (100) selon la revendication 4, dans lequel l'arbre rotatif (110a) est supporté dans les cloisons transversales (132) au moyen de paliers (131) et l'arbre commun (133) est supporté dans les cloisons transversales (132) au moyen de paliers (137).

6. Système de production d'énergie en mer (100) selon l'une quelconque des revendications précédentes, dans lequel chaque pale d'hélice (120) dans le plan d'hélice a un bord d'attaque en flèche (121) avec un rayon correspondant approximativement au diamètre de l'hélice.

7. Système de production d'énergie en mer (100) selon la revendication 6, dans lequel la distance entre les points de fixation respectifs pour l'hélice dans le moyeu en forme de T est d'environ 10 % du diamètre d'hélice du système.

8. Système de production d'énergie en mer (100) selon la revendication 7, dans lequel une pluralité de volets séparés (122) sont disposés au niveau du bord de fuite de chaque pale d'hélice (120).

9. Système de production d'énergie en mer (100) selon la revendication 8, dans lequel chaque volet (122) peut tourner d'environ 45 degrés des deux côtés par rapport à sa position normale autour de son axe de rotation respectif (123).

10. Système de production d'énergie en mer (100) selon la revendication 9, dans lequel la longueur des volets (122) est de 1/3 à 1/4 de la longueur totale L du profil de pale.

11. Système de production d'énergie en mer (100) selon la revendication 10, dans lequel chaque volet (122) est régulé au moyen d'un actionneur.

12. Système de génération d'énergie offshore (100) selon la revendication 11, dans lequel l'actionneur est commandé par une unité centrale recevant des données de groupes de capteurs (151) installés sur des pales d'hélice (120), des volets (122), des générateurs (135), des accouplements (134, 136) pour surveiller la charge et la sortie du système (100).

13. Système de production d'énergie en mer (100) selon l'une quelconque des revendications précédentes, dans lequel le boîtier de générateur (130) est cylindrique ou approximativement cylindrique.

14. Système de production d'énergie en mer (100) selon l'une quelconque des revendications précédentes, dans lequel une capsule profilée (138) entoure le boîtier de générateur (130).

15. Système de production d'énergie en mer (100) selon l'une quelconque des revendications précédentes, dans lequel le boîtier de générateur (130) est relié à un mât profilé (140) supportant le système de production d'énergie (100).

FIG. 1

FIG. 2

FIG. 3

**EP 4 267 847 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8084909 B2
- EP 1442216 B2
- EP 2087205 B1
- JP 2001132615 A
- DE 102004022730 A1
- US 9500179 B2
- EP 0761964 B1
- EP 2233735 A2